# EUROPÄISCHE PATENTANMELDUNG

(11) **EP 4 104 999 A1**
(43) Veröffentlichungstag der Anmeldung: **21.12.2022**
(21) Anmeldenummer: 22000143.2
(22) Anmeldetag: 30.05.2022
(51) Int. Cl.: B29C 48/08, B29C 48/88, B29C 48/92, B29C 48/35, B29C 43/24

(54) **VERFAHREN ZUR HERSTELLUNG EINER FLUORPOLYMERFOLIE, VERFAHRENSGEMÄSS HERGESTELLTE FOLIE UND VERWENDUNG DERSELBEN**

(30) Priorität: 15.06.2021 DE 102021003028
(71) Anmelder: Nowofol Kunststoffprodukte GmbH & Co. KG, 83313 Siegsdorf (DE)
(72) Erfinder: Freutsmiedl, Andreas, D-83236 Übersee (DE); Von Großmann, Ulrich, D-83313 Siegsdorf (DE); Behamer, Alexander, D-83139 Söchtenau (DE)
(74) Vertreter: Einsiedler, Johannes

(57) **Zusammenfassung**

Die Erfindung betrifft ein Verfahren zur Herstellung einer Fiuorpoiymerfolie auf Basis eines Fluor-Copolymers wobei eine auf > 320 °C erhitzte Schmelze eines Fluor-Copolymers aus einer beheizten Düse in ein, zumindest zwei Walzen umfassendes temperaturgesteuertes Formwerkzeug extrudiert und weiter durch dessen Spalt hindurchgeführt wird, um aus der Schmelze die Fluorpolymerfolie zu formen, das dadurch gekennzeichnet ist, dass die Temperatur einer ersten Walze auf 100 °C bis 200 °C, die Temperatur einer zweiten Walze auf 80 °C bis 130 °C und die Temperatur einer dritten Walze von 80 °C bis 160 °C eingestellt ist, und dass unmittelbar nach dem Eintritt in das Formwerkzeug die Temperatur der Schmelze um > 100 °C gesenkt wird. Die Erfindung betrifft weiterhin eine verfahrensgemäß hergestellte Fluorpolymerfolie sowie deren Verwendung.

## Beschreibung

Die Erfindung betrifft ein Verfahren zur Herstellung einer Fluorpolymerfolie auf Basis eines Fluor-Copolymers, wobei eine auf > 320 °C erhitzte Schmelze eines Copolymers aus einer beheizten Düse in ein, zumindest drei Walzen umfassendes temperaturgesteuertes Formwerkzeug extrudiert und weiter durch dessen Spalt hindurchgeführt wird, um aus der Schmelze die Fluorpolymerfolie zu formen. Die Erfindung betrifft auch eine verfahrensgemäß hergestellte Folie sowie deren Verwendung.

Fluorpolymere wie beispielsweise ETFE (Ethylen-Tetrafluorethylen-Copolymer), FEP (Tetrafluorethylen-Hexafluorpropylen-Copolymer), ECTFE (Ethylen-Chlortrifluorethylen-Fluor-Copolymer), EFEP (Ethylen-Tetrafluorethylen-Hexafluorpropylen), PVDF (Polyvinylidenfluorid) oder PCTFE (Polychlortrifluorethylen) sind weit verbreitete thermoplastische Materialien. Aus großtechnisch hergestellten, käuflichen Granulaten dieser Fluorpolymere werden unter anderem Filme oder Folien, bspw. durch Extrusion, Gießen, Kalandrieren oder Blasformen gewonnen.

Derartige Filme oder Folien weisen aufgrund der starken chemischen Bindung zwischen Kohlenstoff und Fluor herausragende Eigenschaften, wie beispielsweise Hochtemperaturstabilität, ausgezeichnete chemische Beständigkeit, geringe Wasserabsorption, niedrige Dielektrizitätskonstanten und Brechungsindices, sowie sehr niedrige Oberflächenenergien auf.

Im Architekturbereich werden diese Folien aufgrund ihrer Witterungsbeständigkeit, Langlebigkeit und guten UV-Beständigkeit, sowie ihrer guten mechanischen und thermischen Eigenschaften großflächig eingesetzt. Eine herausragende Eigenschaft gattungsgemäßer Folien ist aber ihre gute Transparenz, insbesondere im UV-Bereich. Folglich werden Fluorpolymerfolien in vorteilhafterweise als Abdeckmaterial für Schwimmbäder, Sporthallen, Einkaufszentren oder auch Gewächshäuser verwendet. Zusätzliche Anwendungsgebiete gattungsgemäßer Folien sind flexible Frontsheets für PV-Module oder Trennfolien für die Halbleiterindustrie.

Grundsätzlich kann die Transparenz der Folien über die Art der Abkühlung während des Herstellungsprozesses aus der Schmelze entsprechender Granulate gesteuert werden.

Die Kristallitbildung erfolgt dabei in einem Temperaturbereich zwischen der Schmelztemperatur des Granulats und dessen Glastemperatur. Die Geschwindigkeit dieser Kristallbildung ist vor allem von der Temperatur und der Abkühlgeschwindigkeit abhängig, kann aber auch durch den Einsatz von Keimbildnem zusätzlich beeinflusst werden. Die Keimbildner fördern die gleichzeitige Bildung vieler Kristallite und verhindern dadurch die Ausbildung von großen Sphärolithstrukturen.

Die entstehenden Kristallite bilden mehr oder weniger große Überstrukturen, sogenannte Sphärolithe. Je größer die ausgebildeten Sphärolithe, desto trüber wird die Folie. Außerdem kann das Kristallisationsverhalten eines Thermoplasten auch durch andere verfahrenstechnische Parameter, wie beispielsweise Massetemperatur, Schneckendrehzahl, Verweilzeit, Scherung oder Druck, beeinflusst werden. In der Regel hat aber ein schnelles Abkühlen der Schmelze den größten Einfluss auf die Folientransparenz.

Erfolgt die Abkühlung der Schmelze langsam bilden sich große Sphärolithe aus. In Folge erniedrigt sich die Transparenz und die Folie wirkt milchiger. Je höher die Folienstärke, desto langsamer ist in der Regel auch die Abkühlung der Schmelze, was dazu führt, dass mit steigender Folienstärke die Folie milchiger wird. Ein weiteres Problem bei der Abkühlung ist die Planlage der Folie, welche nur ein Optimum erreicht, wenn die Abkühlung kontrolliert erfolgt.

Um ein gleichmäßiges schnelles Abkühlen zu gewährleisten, wird bei vielen Kunststoffen standardmäßig ein Luftmesser (Air-Knive) eingesetzt, welches allerdings bei ETFE aufgrund der hohen Extrusionstemperatur zu Verwerfungen auf der Folienoberfläche und daher zu einer schlechten Planlage führen kann. Haze-Werte von unter 8% sind mit dieser Art der Prozessführung und dem derzeitigen Stand der Technik nicht erreichbar.

Die JPS6127231A offenbart ein Verfahren zur Herstellung einer Fluorpolymerfolie, bei dem die aus einer T-Düse extrudierte Schmelze, mit einer Kühlwalze auf eine Oberflächentemperatur von 80 °C bis 140 °C eingestellt wird und anschließend heiße Luft mit einer Temperatur von 50 °C bis 160 °C auf die Folie auf der Kühlwalze geblasen wird, um eine Fluorpolymerfolie mit verbesserter Ebenheit und verbesserten optischen Eigenschaften wie Transparenz und Glanz herzustellen.

Aus der EP 2 940 067 A1 ist ein Verfahren zur Herstellung einer Fluorpolymerfolie bekannt, bei dem zunächst ein Copolymer durch Erhitzen auf einen Schmelzpunkt oder höher aufgeschmolzen wird, das aufgeschmolzene Copolymer zu einer Folie geformt wird, die auf einer Temperatur gehalten wird, die nicht niedriger als die Kristallisationstemperatur des Copolymers ist, und dann die Folie durch Inkontaktbringen mit einer Kühlwalze, die auf eine Temperatur eingestellt ist, die eine Temperatur nicht überschreitet die um 10 °C höher als die Glastemperatur der Folie ist, schnell abgekühlt wird.Die aus dem genannten Stand der Technik bekannten, sogenannten Chill-Roll-Verfahren sind indes energieaufwändig. Auch die Transparenz bleibt hinter der vom Markt geforderten zurück.

Ein weiteres Verfahren zur Herstellung einer Fluorpolymerfolie umfasst die Kühlung der Schmelze mittels Sleeve-Touch (Hersteller SML). Hierbei handelt es sich um ein über Walzen gekühltes Stahlband, welches die Schmelze and die Chill-Roll dergestalt drückt, dass ein schnelleres Abkühlen erzielt wird. Die Auflagefläche ist dabei jedoch nicht punktuell, sondern flächig. Die erreichte Transparenz ist gegenüber den Chill-Roll Verfahren bereits verbessert, führt, allerdings aufgrund der benötigten Auflagefläche, immer noch zu einer visuell erkennbaren hohen Trübung der Folie.

Schließlich offenbart die EP 3 187 525 A1 ein Verfahren zur Herstellung einer ETFE-Folie, umfassend das Schmelzen eines ETFE, um eine Schmelze zu erhalten, das kontinuierliche Extrudieren der Schmelze durch eine Düse zum Formen der Schmelze zu einer Folie, das Passieren lassen der Folie zwischen zwei Walzen und das Abkühlen der Folie, wobei eine der beiden Walzen eine starre Walze und die andere eine elastische Walze ist, wobei die beiden Walzen unter einem linearen Druck von 0,1 bis 1.000 N/cm gepresst werden, wobei die Temperatur der Schmelze unmittelbar vor dem Durchgang zwischen den beiden Walzen von 200 °C bis 330 °C beträgt, und wobei Oberflächentemperatur der beiden Walzen durchschnittlich zwischen 50 °C und 180 °C beträgt.

Der Erfindung liegt die Aufgabe zugrunde, ein Verfahren zur Herstellung einer Fluorpolymerfolie der eingangs beschriebenen Art bereitzustellen, mit dem Folien mit gegenüber dem Stand der Technik verbesserten Transmissions- wie auch Haze-Werten erhältlich sind.

Diese Aufgabe wird in Verbindung mit dem Oberbegriff des Patentanspruchs 1 erfindungsgemäß dadurch gelöst, dass die Temperatur einer ersten Walze auf 100 °C bis 200 °C, die Temperatur einer zweiten Walze auf 80 °C bis 130 °C und die Temperatur einer dritten Walze auf 80 °C bis 160 °C eingestellt ist, und dass unmittelbar nach dem Eintritt in das Formwerkzeug die Temperatur der Schmelze um > 100 °C gesenkt wird.

Das erfindungsgemäße Verfahren zeichnet sich dadurch aus, dass die Folie schnell, und insbesondere kontrolliert abgekühlt wird. Dies erfolgt erfindungsgemäß indem unmittelbar nach dem Eintritt in das Formwerkzeug die Temperatur der zunächst auf > 320 °C, bevorzugt > 320 °C bis < 350 °C, erhitzten Schmelze um > 100 °C gesenkt wird. Damit kann die Transmission und die Trübung (Haze) gegenüber dem Stand der Technik entscheidend verbessert werden.

Das mittels einer Temperatursteuerungseinrichtung temperaturgesteuerte Formwerkzeug umfasst zumindest drei Walzen, von denen jede einzelne individuell temperaturgesteuert bzw. -geregelt ist. Die jeweilige Temperatursteuerung erfolgt beispielsweise mittels eines temperierten Fluids, insbesondere Wasser, und einer entsprechend eingerichteten Steuer- bzw. Regeleinrichtung.

Bei dem temperaturgesteuerten Formwerkzeug handelt es sich insbesondere um einen Kalander mit einer Hauptkalanderwalze und einer Anpresswalze. Beim Kalandrieren wird anhand der Walzenanordnung und der Art der Zuführung der Schmelze zwischen verschiedenen Kalander-Arten unterschieden. Grundsätzlich kommt jede bekannte Kalander-Art, d.h. I-, F-, L- oder Z-Kalander mit zumindest drei Walzen für das erfindungsgemäße Verfahren infrage.

Besonders bevorzugt handelt es sich bei dem temperaturgesteuerten Formwerkzeug um einen variablen Dreiwalzen-F-Kalander. In vorteilhafterweise wird die Schmelze von oben zugeführt, dergestalt, dass ggf. auftretende Dämpfe aus der Schmelze aufsteigen können, ohne die Walzen oder die Folie zu berühren.

Eine sehr gute Temperaturkonstanz innerhalb des Kalanders ist sowohl längs der Walzen als über den Umfang erforderlich, da neben der erfindungsgemäßen Senkung der Schmelzentemperatur größere Temperaturunterschiede auch zu Spannungen in der Folie führen können, die sich negativ auf die weiteren Verarbeitungsprozesse auswirken. Die Temperatursteuerung der einzelnen Walzen erfolgt insbesondere mit temperierten Druckwasser, das durch Bohrungen, die sich unmittelbar unter der Walzenoberfläche befinden, fließt.

Um den erfindungsgemäß auf > 320 °C, bevorzugt auf 330 °C bis 350 "C, erhitzten, aus dem Extruder radial zugeführten Schmelzenstrom eines Fluor-Copolymers in eine axiale Abströmrichtung umzulenken, wird eine Düse, bevorzugt eine Breitschlitzdüse mit T-Kanal oder Kleiderbügelgeometrie verwendet. Die Schmelze wird dabei von oben aus der Düsenlippe auf eine erste Walze oder in einen Walzenspalt eines ersten Walzenpaares extrudiert.

Die in der Regel fest montierte Automatikdüse ist beheizt, um die geforderte Schmelzentemperatur beim Austritt aus dem Werkzeug sicher zu stellen.

Um die erfindungsgemäße Schmelzentemperatur über die gesamte Düsenbreite zu gewährleisten kann an den beiden Seitenflächen der Düse je eine zusätzliche Heizeinrichtung ausgebildet sein. In vorteilhafterweise lassen sich damit die verbesserten Transmissions- wie auch Haze-Werte über die gesamte Folienbreite sicherstellen und ein Einreißen der Folienränder wird vermeiden.

Die Heizeinrichtung ist beispielsweise eine, mittel- oder unmittelbar an den Seitenflächen der Düse angeordnete Plattenheizung, in Form von zwei mit elektrischer Energie beaufschlagbarer Stahlplatten. Die genannten Heizeinrichtungen sind unabhängig von einer Düsenheizeinrichtung steuer- bzw. regelbar.

Die Dickentoleranz der Schmelze bzw. der Fluorpolymerfolie wird vorzugsweise über eine Vielzahl, individuell beheizbarer und verstellbarer, je nach Ausführung in einem Winkel zwischen 30° und 85° zur Düsenlippe angeordneter Bolzen, die mit zunehmender Temperatur auf die Düsenlippe drücken, mittels eine Steuerkreises eingestellt. Der Gesamtvolumenstrom, der durch die Düse fließt, lässt sich aus der Summe der Austrittsvolumenströme der einzelnen Segmente der Düsenzone ermitteln.

Bevorzugt weist die Düse einen Auslass auf, der in einem Abstand von < gleich 50 mm von einem Kontaktpunkt der Schmelze mit der ersten Walze bzw. dem ersten Walzenpaar eingestellt ist.

In vorteilhafterweise ist die äußere Haut der Schmelze nur in einem tangentialen Bereich von 10 bis 20 mm, bevorzugt < 5 mm gleichzeitig mit beiden Walzen des ersten, eine Hauptkalanderwalze und eine Anpresswalze umfassenden Walzenpaares in Kontakt so dass die Außentemperatur der Schmelze/Folie (Schmelze/Folie entspricht je nach verwendetem Fluor-Copolymer den fließenden Übergang zwischen einer Schmelze und eine Folie) beidseitig schlagartig abgekühlt wird. Durch den Anpressdruck der Anpresswalze wird ein einschlussfreier Kontakt der Schmelze/Folie auf der Hauptkalanderwalze ermöglicht und somit ein optimaler Abtransport der Wärme auch aus der inneren Polymerschicht gewährleistet. Anschließend passiert die Schmelze/Folie den ersten Walzenspalt, insbesondere Glättspalt, vorzugsweise in einer Zeit von < 4 cs (Hundertstelsekunden) mit 7,5 m/min.

Das erste parallel angeordnete Walzenpaar, mit der Hauptkalanderwalze und der Anpresswalze weist, in Abhängigkeit der Folienstärke einen definierten Walzenspalt und/oder einen definierten Walzendruck, bevorzugt in einem Bereich von 2 bis 60 bar, auf. Die Folienstärke wird durch die Schrittgröße und die Zuggeschwindigkeit bzw. die Spaltweite der Walzen eingestellt.

Mittels einer Temperatursteuerungseinrichtung wird eine Temperatur der ersten Walze (Hauptkalanderwalze) auf von 100 °C bis 200 °C, bevorzugt auf von 140 °C bis 180 °C und besonders bevorzugt auf 160 °C eingestellt. Wichtig bei diesem ersten Verfahrensschritt ist, dass die Abkühlgeschwindigkeit, d.h. die Kontaktzeit der Schmelze auf der ersten Kalanderwalze in Abhängigkeit von der Schmelzentemperatur so eingestellt wird, dass eine unterkühlte Schmelze entsteht, die Oberfläche aber noch nicht eingefroren wird bevor mit der zweiten Kalanderwalze (Anpresswalze) durch Andrücken im Spalt weitergehend abgekühlt wird.

Die Temperatur der zweiten Walze (Anpresswalze) wird in Abhängigkeit der Folienstärke gesteuert bzw. geregelt. Die Temperatur der Anpresswalze weist bevorzugt eine Temperatur von 80 °C bis 130 °C, und besonders bevorzugt eine Temperatur von 90 °C bis 120 °C auf.

Die Temperatur der dritten Walze des Formwerkzeugs weist eine Temperatur von 80 °C bis 160 °C, und bevorzugt eine Temperatur von 90 bis 150 °C auf. Der Spalt zwischen der dritten Walze und der Hauptkalanderwalze ist variabel. Bevorzugt wird die dritte Walze mit einem Druck von 5 bis 60 bar an die Hauptkalanderwalze angepresst, besonders bevorzugt mit einem Druck von 10 bis 40 bar.

Indem die Schmelze/Folie über eine dritte Walze geführt wird, erfolgt erfindungsgemäß eine schnelle Abkühlung der zweiten Seite der Folie, bevor die Restwärme aus dem inneren Bereich der Schmelze/Folie die der Hauptkalanderwalze abgewandte Folienoberfläche bis zur Rekristallisationstemperatur wiedererwärmt. Die dritte Walze kann über einen Winkel von -10° bis 90° verfahren werden. Dieses Verfahren ermöglicht eine noch sensiblere Steuerung des Abkühlverhaltens, da der Ablösepunkt von der Hauptkalanderwalze und die Umschlingung gezielt eingestellt werden können.

Durch die schnelle, und insbesondere kontrolliert temperaturgesteuerte Abkühlung einer auf > 320 °C erhitzten Schmelze eines Fluor-Copolymers kann das Maß für die Trübung (Haze) um 50% reduziert werden. Dementsprechend sind mittels des erfindungsgemäßen Verfahrens Fluorpolymerfolien mit einem Haze von < 5% und einer Transmission von > 90% bei einer Folienstärke von bis zu 250 µm herstellbar.

Für viele Anwendungen besteht die Forderung nach einer Fluorpolymerfolie auf Basis eines Fluor-Copolymers mit einer sehr hohen Lichtstreuung. Die Lichtstreuung wird über den Haze-Wert definiert, wie bei der transparenten Folie. Allerdings muss hier der Haze-Wert bei mindestens 50% liegen. Der Vorteil der Lichtstreuung kann sowohl aus beleuchtungstechnischer Sicht Vorteile bringen aber, beispielsweise auch das Pflanzenwachstum in Gewächshäusern verbessern, da durch den Einsatz einer Fluorpolymerfolie mit hohem Haze Anteil ein Schattenwurf einer Gewächshauskonstruktion vermieden werden kann und daher das Licht gleichmäßig im Gewächshaus verteilt wird.

Als Haze, gemessen nach ASTM D1003, wird der Anteil des Lichtes, der ungerichtet durch die Folie transmittiert wird, also der Anteil des Streulichtes, bezeichnet. D.h. die Lichtmenge die beim Durchdringen eines Materials um mehr als 2,5° abgelenkt wird. Die Transmission bleibt dagegen unverändert, gemessen nach NEN 2675:2018 + C1.

Der Haze-Wert beschreibt demnach den Anteil des transmittierten Lichts, der von der durchstrahlten Folienprobe nach vorne großwinklig gestreut wird. Somit quantifiziert der Haze-Wert Materialfehler in der Oberfläche oder der Struktur, die die klare Durchsicht stören. Die Norm erfordert vier Transmissionsmessungen. Für jede Transmissionsmessung wird der Lichttransmissionsgrad berechnet. Die vier Transmissionsgrade werden zum prozentualen Haze-Wert verrechnet.

Durch die Extrusion der Schmelze, vorzugsweise in den Glättspalt (bzw. Prägespalt), und die kontrolliert temperaturgesteuerte Abkühlung einer auf > 320, °C erhitzten Schmelze eines Fluor-Copolymers kann in einer weiteren Ausführungsform des erfindungsgemäßen Verfahrens ein Haze von 50% und mehr erreicht werden.

Hierfür eignet sich besonders ein herkömmlicher Dreiwalzen-F-Kalander, mit zumindest drei temperaturgesteuerten bzw. temperaturgeregelten Walzen, die mit einer Kühlvorrichtung verbunden sind, wobei zumindest eine Walze mattiert ist. Dies kann sowohl eine mattierte Stahl-, als auch eine mattierte Gummiwalze sein. Durch den Einsatz mattierter Walzen kann auf der Oberfläche der Fluorpolymerfolie in vorteilhafterweise eine matte Struktur erreicht werden.

In einer weiteren Ausführungsform des erfindungsgemäßen Verfahrens ist eine erste Walze mattiert, und eine zweite hochglanzpoliert. Dadurch wird in vorteilhafterweise erreicht, dass, nur eine Seite die Mattierung aufweist. Diese Seite ist zumeist in ein Gebäude, wie bspw. ein Gewächshaus, gerichtet. Die Außenseite bleibt hierbei glatt bzw. glänzend, um eine optimale Schmutzabweisung zu garantieren.

In einer noch weiteren Ausführungsform des erfindungsgemäßen Verfahrens ist die erste und zweite Walze mattiert, und die folgenden Walzen hochglanzpoliert. Dadurch wird in vorteilhafterweise erreicht, dass beide Folienseiten eine Mattierung aufweisen. Dies hat für bestimmte industrielle Anwendungen einen Vorteil. Z.B. kann diese Folie für einen Prozess zur Einbettung eines elektronischen Bauteils in ein Harz (electronic packaging) verwendet werden und hat den Vorteil, dass einerseits das Bauteil mattiert ist, und anderseits ein optimales Vakuum im Werkzeug aufgebaut werden kann, ohne dass es zur Faltenbildung an der Folie kommt.

Durch die genannten Ausführungsformen kann eine Mattierung der Folie mit einem Haze von 50% ohne Zusätze erreicht werden. Durch die Zugabe eines Pigments, beispielsweise auf Basis eines mineralischen Rohstoffes wie Quarz mit einem Anteil von 1,5 bis 3% können dementsprechend auch Mattierungen mit einem Haze von 95% bis zu 99% erreicht werden. Die Güte und Gleichmäßigkeit der Mattierung kann zusätzlich zum Haze und der definierten Rauheit auch über den Glanz bestimmt werden. Bevorzugte Winkel bei der Glanzmessung nach EN ISO 2813:2014 von mattierten Folien sind 85° und 60°.

Die Oberflächenrauheit der mattierten Folien ist vorzugsweise > 1,8 µm (Ra - Wert > 1,8 µm). Ra bezeichnet eine Einheit für den Industriestandard für die Qualität der Oberflächenendbearbeitung und stellt die durchschnittliche Höhe der Rauheit dar, insbesondere die durchschnittliche Absolutentfernung von der Mittellinie des Rauheitsprofils innerhalb des Auswertungsbereichs.

Über das erfindungsgemäße Verfahren lassen sich Fluorpolymerfolien mit einer Zugfestigkeit von mindestens 50 MPa, bei einer Folienstärke von 1 µm bis 1000 µm herstellen. Die Folien weisen einen Haze von mindestens 50% und einem Ra-Wert von mindestens 1,8 µm auf.

### Beispiel 1:

Ein ETFE Granulat (ETFE 6235 Z von 3M Dyneon, spezifische Dichte: 1,72 g/cm³, Schmelzpunkt 266 °C. MFR: 10g / 10min (5 kg), Glasüberganstemperatur 90 °C) wurde in einem Extruder (100 mm Durchmesser, L:D 32) aufgeschmolzen und durch eine Kleiderbügeldüse gedrückt mit einer Austrittsbreite von 1900 mm. Vor Verlassen des Werkzeuges wurde eine Schmelzentemperatur von 347 °C gemessen. Die genaue Temperaturführung ist in Tabelle 1 dargestellt. Anschließen wurde die Schmelze senkrecht auf die Hauptkalanderwalze und dann weiter in den Walzenspalt geführt, welcher mit einem Anpressdruck von 2 bar beaufschlagt wurde. Der Abstand zwischen Düsenaustritt und Walzenspalt betrugt 25 mm.

Die gemessene Oberflächentemperatur der Hauptkalanderwalze betrug 173 °C, die der Anpresswalze 119 °C. Anschließend wurde die Folie über eine dritte Walze mit einer gemessenen Oberflächentemperatur von 95 °C geführt. Der Spalt zwischen Hauptkalanderwalze und der dritten Walze betrug 5 mm. Alle drei Walzen wiesen ein Hochglanzoberfläche auf. Das Verhältnis von Extruderausstoß zur Geschwindigkeit der Hauptkalanderwalze wurde so gewählt, dass eine Foliendicke von 200 µm produziert werden konnte.

Im Anschluss wurde die fertige Folie mittels diverser Messungen charakterisiert, wie in Tabelle 2 dargestellt.

**Tabelle 1: Extrusionstemperaturen**

| Extruder Zone 1 | Extruder Zone 2 | Extruder Zone 3 | Extruder Zone 4 | Extruder Zone 5 | Adapter | Schmelzesieb | Düse |
|---|---|---|---|---|---|---|---|
| 200°C | 330° | 335°C | 340° | 350°C | 350°C | 350°C | 350°C |

**Tabelle 2: Labormessungen an Folie in Beispiel 1**

| Merkmal | Zugfestigkeit | Bruchdehnung | Haze | Transmission |
|---|---|---|---|---|
| Prüfmethode | DIN EN ISO 536 | DIN EN ISO 536 | ASTM D1003 | NEN 2675:2018 + C1 |
| Messwert | 58 | 500 | 4 | 91 |
| Einheit | MPa | % | % | % |

### Beispiel 2:

Hier wurde wie in Beispiel 1 auch eine 200 µm dicke ETFE Folie hergestellt. Der einzige Unterschied bestand darin, dass die Hochglanzanpresswalze durch eine mattiere Anpresswalze ersetzt wurde. Die Oberflächenrauheit dieser mattierten Walze betrug im arithmetischen Mittelwert (Ra) 2,0 µm. Außerdem wurde die Walzentemperatur der Anpresswalze angepasst, die gemessene Oberflächentemperatur betrugt 114°C.

Die Oberflächenseite der Schmelze, die der mattierten Anpresswalze zugewandt war, wurde beim Auftreffen auf die Walze ebenfalls mattiert. Der Anpressdruck im Walzenspalt wurde auf 5 bar erhöht. Bei der Charakterisierung der Folieneigenschaften wurde zusätzlich die Oberflächenrauheit der mattierten Folienoberfläche bestimmt, wie in Tabelle 3 dargestellt.

**Tabelle 3: Labormessungen an Folie In Beispiel 2**

| Merkmal | Zugfestigkeit | Bruchdehnung | Haze | Transmission | Rauheit |
|---|---|---|---|---|---|
| Prüfmethode | DIN EN ISO 536 | DIN EN ISO 536 | ASTM D1003 | NEN 2675:2018 + C1 | DIN EN ISO 4287 |
| Messwert | 60 | 530 | 50 | 90 | 1,8 |
| Einheit | MPa | % | % | % | µm |

**Tabelle 4: Glanzmessunaen**

| Merkmal | Glanz 60 ° | Glanz 85 ° |
|---|---|---|
| Prüfmethode | EN ISO 2813:2014 | EN ISO 2813:2014 |
| Messwert | 9,91 | 9,94 |
| Einheit | GE | GE |

### Beispiel 3:

Hier wurde die exakte Verfahrenstechnik wie in Beispiel 2 angewendet. Aber es wurde dem ETFE Rohstoff noch zusätzlich ein Feldspatmehl in verschiedenen Dosierungsgraden zugeführt, wie in Tabelle 5 dargestellt. Durch die Zugabe dieses Additives konnte der Haze der Folie deutlich erhöht werden, wobei sich die Transmission kaum verändert.

**Tabelle 5: Mischungsverhältnis**

| **Mischung** | **Gewichtsverhältnis ETFE zu Feldspatmehl** |
|---|---|
| 1 | 99:1 |
| 2 | 98:2 |
| 3 | 97:3 |

**Tabelle 6: Labormessungen an Folie in Beispiel 3**

| | | | |
|---|---|---|---|
| Muster | 1 | 2 | 3 |
| Transmission in % | 90 | 89 | 87 |
| Haze in % | 93 | 95 | 99 |

### Beispiel 4:

Ein ETFE Granulat wurde in einem Extruder (100 mm Durchmesser, L:D 32) aufgeschmolzen und durch eine Kleiderbügeldüse gedrückt mit einer Austrittsbreite von 1900 mm. Vor Verlassen des Werkzeuges wurde eine Schmelzentemperatur von 320 °C gemessen.

Anschließen wurde die Schmelze senkrecht auf die Hauptkalanderwalze und dann in den Walzenspalt geführt, welcher mit einem Anpressdruck von 2 bar beaufschlagt wurde. Der Abstand zwischen Düsenaustritt und Walzenspalt betrugt 25 mm.

Die Temperatur der Schmelze/Folie im Walzenspalt betrug 210 °C, unmittelbar nach dem Spalt 180 °C, nach weiteren 10 cm Vortrieb 170 °C und nach weiteren 10 cm 167 °C. Im Walzenspalt zwischen der Hauptkalanderwalze und dritter Walze betrug die Temperatur der Folie 160 °C und nach dem Verlassen des Spaltes 143 °C. Die Temperaturen der Walzen in diesem Beispiel betrugen 160 °C für die Hauptkalanderwalze, 110 °C für die Anpresswalze und 110 °C für die dritte Wälze. Die Folienstärke betrug 250 µm; der Haze-Wert betrug 5%, die Transmission 91%.

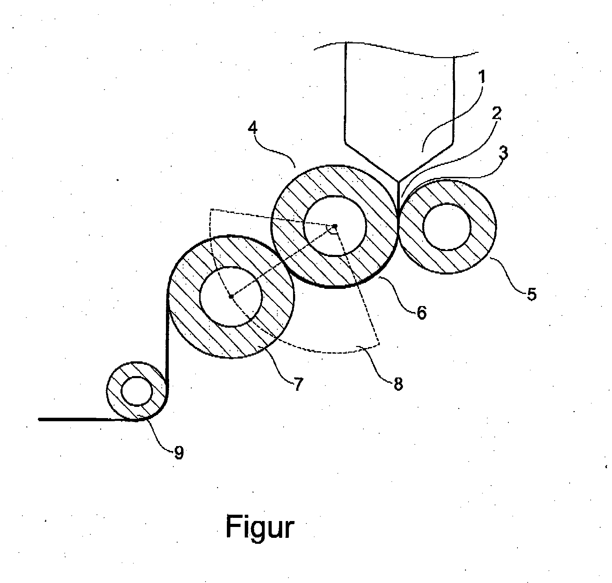

Weitere Einzelheiten der Erfindung werden in der Zeichnung anhand einer schematisch dargestellten Ausführungsform erläutert:
Die Figur zeigt schematisch eine Kleiderbügeldüse (1) (vgl. hierzu bsp. Extrusions- und Coextrusionsdüsen von Nordson) aus der eine Schmelze (2) senkrecht auf die Hauptkalanderwalze und dann weiter in den Walzenspalt (3) einer ersten Walze (4 Hauptkalanderwalze) und einer zweiten Walze (5 Anpresswalze) geführt wird. Die Temperatur der beiden Walzen wird in Abhängigkeit der Folienstärke gesteuert bzw. geregelt. Die aus dem Walzenspalt (3) austretende Schmelze/Folie (6) wird über eine dritte Walze (7) mit einer gesteuerten bzw. geregelten Oberflächentemperatur geführt.

Die dritte Walze (7) ist über einen Winkel (8) von - 10° bis 90° verfahrbar. Schließlich kann die Folie über eine vierte Walze (9) weitergeführt werden. Je nach Herstellungsverfahren kann entweder die erste Walze (4) mattiert, und die zweite Walze (5) hochglanzpoliert oder aber die erste und zweite Walze (4, 5) mattiert, und die folgende Walze (7, 9) hochglanzpoliert sein.

Die erfindungsgemäß hergestellten Folien zeigen gegenüber dem Stand der Technik verbesserte optische Eigenschaften wie Transparenz und Glanz. Demnach sind Folien erhältlich mit einer Lichttransmission von > 90%, einer hemisphärischen Transmission von > 80%, einer ultravioletten Transmission von > 80% sowie Haze-Werten von 2% bis über 60%.

Hohe Haze-Werte in Verbindung mit den genannten Transmissionen verhindern einerseits Schattenwurf, der das Pflanzenwachstum beeinträchtigen würde, andererseits lassen sie die UV-Strahlen tiefer in den Pflanzenbestand eindringen und verringern so das Wachstum von Pilzen u.ä. Die Folien werden daher in vorteilhafterweise im Agrar- und Architekturbereich eingesetzt.

### Bezugszeichenliste:

- 1: Kleiderbügeldüse
- 2: Schmelze
- 3: Walzenspalt
- 4: Hauptkalanderwalze
- 5: Anpresswalze
- 6: Schmelze/Folie
- 7: dritte Walze
- 8: Winkel
- 9: vierte Walze

## Patentansprüche

1. Verfahren zur Herstellung einer Fluorpolymerfolie auf Basis eines Fluor-Copolymers wobei eine auf > 320 °C erhitzte Schmelze eines Fluor-Copolymers aus einer beheizten Düse in ein, zumindest drei Walzen umfassendes temperaturgesteuertes Formwerkzeug extrudiert und weiter durch dessen Spalte hindurchgeführt wird, um aus der Schmelze die Fluorpolymerfolie zu formen, **dadurch gekennzeichnet, dass** die Temperatur einer ersten Walze auf 100 °C bis 200 °C, die Temperatur einer zweiten Walze auf 80 °C bis 130 °C und die Temperatur einer dritten Walze von 80 °C bis 160 °C eingestellt ist, und dass unmittelbar nach dem Eintritt in das Formwerkzeug die Temperatur der Schmelze um > 100 °C gesenkt wird.

2. Verfahren nach Anspruch 1, **dadurch gekennzeichnet, dass** an den beiden Seitenflächen der Düse je eine zusätzliche, unabhängig von einer Düsenheizeinrichtung steuer- bzw. regelbare Heizeinrichtung ausgebildet ist.

3. Verfahren nach Anspruch 1 oder 2, **dadurch gekennzeichnet, dass** die Schmelze nur in einem tangentialen Bereich von 10 bis 20 mm gleichzeitig mit beiden Walzen des ersten Walzenpaares in Kontakt ist.

4. Verfahren nach einem der vorstehenden Ansprüche, **dadurch gekennzeichnet, dass** die Schmelze/Folie den ersten Walzenspalt in einer Zeit von < 4 cs mit 7,5 m/min passiert.

5. Verfahren nach einem der vorhergehenden Ansprüche, **dadurch gekennzeichnet, dass** die Schmelze des Fluor-Copolymers aus der Düse von oben in das Formwerkzeug extrudiert wird, die einen Auslass aufweist, der in einem Abstand von < gleich 50 mm von einem Kontaktpunkt der Schmelze mit einer ersten Walze aufweist.

6. Verfahren nach einem der vorhergehenden Ansprüche, **dadurch gekennzeichnet, dass** der Walzendruck zwischen dem ersten Walzenpaar zwischen 2 und 8 bar eingestellt ist.

7. Verfahren nach einem der vorhergehenden Ansprüche, **dadurch gekennzeichnet, dass** die erste Walze mattiert und eine zweite und dritte Walze hochglanzpoliert ist.

8. Verfahren nach einem der Ansprüche 1 bis 6, **dadurch gekennzeichnet, dass** die erste und zweite Walze mattiert ist, und folgende Walzen hochglanzpoliert sind.

9. Fluorpolymerfolie auf Basis eines Fluor-Copolymers hergestellt nach einem Verfahren gemäß den Ansprüchen 1 bis 6, mit einer Lichttransmission von > 90% und einem Haze von höchstens 6%.

10. Fluorpolymerfolie auf Basis eines Fluor-Copolymers hergestellt nach einem Verfahren gemäß den Ansprüchen 7 oder 8 mit einer Lichttransmission von > 90% und mit einem Haze von zumindest 50%.

11. Verwendung einer Fluorpolymerfolie auf Basis eines Fluor-Copolymer nach Anspruch 9 oder 10 im Architekturbereich.
